# EUROPÄISCHE PATENTANMELDUNG

(11) **EP 1 978 334 A2**
(43) Veröffentlichungstag der Anmeldung: **08.10.2008**
(21) Anmeldenummer: 08000763.6
(22) Anmeldetag: 16.01.2008
(51) Int. Cl.: G01D 5/20

(54) **Einrichtung zur Erfassung eines Drehwinkels und Buchse zur Verwendung im Fahrwerk eines Kraftfahrzeugs**

(30) Priorität: 04.04.2007 DE 102007016683
(71) Anmelder: Carl Freudenberg KG, 69469 Weinheim (DE)
(72) Erfinder: Köck, Gordon, 69198 Schriesheim (DE); Klatt, Christopher, Dr., 69118 Heidelberg (DE); Klesen, Christof, 64397 Modautal (DE)

(57) **Zusammenfassung**

Eine Einrichtung zur Erfassung eines Drehwinkels, umfassend mindestens eine Sendespule (4) und mindestens eine Empfängerspule (5), wobei die Empfängerspule (5) von der Sendespule (4) beabstandet angeordnet ist und wobei die Sendespule (4) ein Magnetfeld erzeugt, welches in der Empfängerspule (5) eine Spannung induziert, ist im Hinblick auf die Aufgabe, eine Einrichtung zur Erfassung eines Drehwinkels zu schaffen, welche bei kompakter Bauweise eine hohe Zuverlässigkeit zeigt, dadurch gekennzeichnet, dass die Empfängerspule (5) und ein Abdeckelement (6) derart relativ zueinander verdrehbar sind, dass das Abdeckelement (6) die Empfängerspule (5) zumindest teilweise bedeckt. Des Weiteren ist eine Buchse zur Verwendung im Fahrwerk eines Kraftfahrzeugs angegeben, welche eine solche Einrichtung umfasst,

## Beschreibung

### Technisches Gebiet

Die Erfindung betrifft eine Einrichtung zur Erfassung eines Drehwinkels, umfassend mindestens eine Sendespule und mindestens eine Empfängerspule, wobei die Empfängerspule von der Sendespule beabstandet angeordnet ist und wobei die Sendespule ein Magnetfeld erzeugt, welches in der Empfängerspule eine Spannung induziert. Die Erfindung betrifft des Weiteren eine Buchse zur Verwendung im Fahrwerk eines Kraftfahrzeugs, umfassend eine Einrichtung zur Erfassung eines Drehwinkels, einen Kern und eine zum Kem konzentrisch angeordnete Hülse, wobei der Kem und die Hülse durch ein elastisches Verbindungselement miteinander verbunden sind und wobei der Kem und die Hülse relativ zueinander verdrehbar sind.

### Stand der Technik

Eine Einrichtung der genannten Art ist beispielsweise aus der EP 1 422 492 A1 bekannt. Dort wird eine Welle von einer Sendespule und Empfängerspulen umgeben. Die Spulenanordnung dient zur Erfassung einer Translationsbewegung der Welle orthogonal und parallel zu deren Achse.

In der Technik ergibt sich häufig das Problem, die Verdrehung zweier Bauteile relativ zueinander zuverlässig zu erfassen. Diese Aufgabe stellt sich beispielsweise bei wechselnden Belastungen eines Fahrwerks, wenn nämlich ein Achsschenkel eine Schwenkbewegung ausführt. Bei dieser Schwenkbewegung könnte ein Ende des Achsschenkels am Rad festgelegt sein, wobei das andere Ende Auf- und Abbewegungen ausführt.

Die Erfassung eines Drehwinkels bzw. Schwenkwinkels des Achsschenkels kann beispielsweise bei der Einregulierung der Lichtanlage des Fahrzeugs verwendet werden, um nämlich die Scheinwerfer auf die Beladung des Fahrzeugs einzustellen.

Insbesondere in Kraftfahrzeugen werden an Einrichtungen zur Erfassung eines Drehwinkels hohe Anforderungen hinsichtlich ihrer Kompaktheit gefordert. Des Weiteren sollten die Einrichtungen einen konstruktiv einfachen Aufbau aufweisen, um eine geringe Fehleranfälligkeit zu zeigen.

### Darstellung der Erfindung

Der Erfindung liegt daher die Aufgabe zugrunde, eine Einrichtung zur Erfassung eines Drehwinkels zu schaffen, welche bei kompakter Bauweise eine hohe Zuverlässigkeit zeigt.

Erfindungsgemäß wird die voranstehende Aufgabe durch eine Einrichtung mit den Merkmalen des Patentanspruchs 1 gelöst.

Danach ist die eingangs genannte Einrichtung dadurch gekennzeichnet, dass die Empfängerspule und ein Abdeckelement derart relativ zueinander verdrehbar sind, dass das Abdeckelement die Empfängerspule zumindest teilweise bedeckt. ,

Erfindungsgemäß ist erkannt worden, dass die Einrichtung letztlich aus drei wesentlichen Bauteilen gefertigt werden kann, wodurch ein konstruktiv einfacher Aufbau gegeben ist. Die wesentlichen Bauteile umfassen die Empfängerspule, die Sendespule und das Abdeckelement. Des Weiteren ist erkannt worden, dass die relative Verdrehbarkeit der Empfängerspule und des Abdeckelements erlaubt, Drehwinkel zu erfassen, wenn nämlich eine Änderung der Induktionsspannung in der Empfängerspule detektiert wird. Die Verwendung eines Abdeckelements erlaubt eine unmittelbare mechanische Ankopplung der Drehbewegung eines Bauteils an ein Magnetfeld. Aufgrund der Störung des Magnetfelds bzw. der Änderung der Induktionsspannung in der Empfängerspule kann eine nachgeordnete Elektronik eine Verdrehung des Abdeckelements von einer ersten Position in eine zweite Position erfassen. Insoweit ist eine zuverlässige Erfassung des Drehwinkels des Abdeckelements bzw. der Sendespule relativ zum Abdeckelement ermöglicht, Folglich ist die eingangs genannte Aufgabe gelöst.

Die Sendespule und die Empfängerspule könnten ortsfest in einer Ebene liegen, wobei das Abdeckelement relativ zur Empfängerspule und zur Sendespule derart verdrehbar ist, dass es die Empfängerspule zumindest teilweise abdeckt. Durch diese konkrete Ausgestaltung können sowohl die Empfängerspule als auch die Sendespule einem Bauteil drehfest zugeordnet werden, wobei das Abdeckelement drehfest einem anderen Bauteil zugeordnet werden kann. Die relative Verdrehung der beiden Bauteile zueinander kann sodann zuverlässig gemessen werden, wenn nämlich das Abdeckelement die Empfängerspule teilweise oder vollständig abdeckt und dadurch die Induktionsspannung innerhalb der Empfängerspule ändert. Da die Sendespule und die Empfängerspule in einer Ebene liegen, kann der magnetische Fluss der Sendespule die Empfängerspule problemlos durchdringen.

Vor diesem Hintergrund könnte die Drehachse des Abdeckelements zur Achse der Sendespule koaxial angeordnet sein. Diese konkrete Ausgestaltung erlaubt einen besonders kompakten Aufbau der Einrichtung, da das Abdeckelement sehr Platz sparend zumindest teilweise innerhalb der Sendespule liegt. Bei dieser konkreten Ausgestaltung wird die Ausdehnung der Einrichtung letztlich durch den Abstand der Empfängerspule von der Sendespule festgelegt.

Die Empfängerspule und die Sendespule könnten auf einer Platine angeordnet sein. Diese konkrete Ausgestaltung erlaubt eine besonders flache Ausbildung der Einrichtung, da die Höhe der Einrichtung durch die Dicke des Abdeckelements und die Platine festgelegt ist. Eine besonders flache Ausgestaltung kann dadurch erzielt werden, dass die Empfängerspule und die Sendespule durch geätzte Strukturen auf der Platine ausgebildet sind. Die Windungen der Spulen könnten durch einen Ätzprozess auf der Platine freigelegt oder aufgebracht werden. Denkbar ist auch, die Windungen der Spulen auf die Platine aufzudampfen.

Mehrere Empfängerspulen könnten die Sendespule umgeben. Durch diese konkrete Ausgestaltung ist eine besonders zuverlässige Erfassung des Drehwinkels möglich, da eine nachgeordnete elektronische Einrichtung mehrere Signale von den verschiedenen Empfängerspulen verarbeiten kann.

Durch diese konkrete Ausgestaltung wird die Auflösung und die Genauigkeit der Einrichtung bei der Erfassung des Drehwinkels erhöht. Insbesondere wird die Erfassung der Drehrichtung erheblich vereinfacht.

Das Abdeckelement könnte aus einem Metall gefertigt sein. Durch diese konkrete Ausgestaltung wird eine besonders deutliche Signalerzeugung durch die Empfängerspule ermöglicht. Denkbar ist vor diesem Hintergrund, dass das Abdeckelement aus Aluminium, Kupfer oder aus Stahl gefertigt wird.

Vor diesem Hintergrund sind zwei Effekte zu beobachten. Wenn die Sendespule mit einer Wechselspannung betrieben wird, deren Frequenz < 10 kHz ist, wirkt das Abdeckelement als elektromagnetisches Koppelelement. In diesem Fall fungiert das Abdeckelement als Flussleitblech, wobei der magnetische Fluss der Sendespule von dem Abdeckelement eingefangen und je nach Winkelposition zu der Empfängerspule geleitet wird. Beim Betrieb der Sendespule mit niedrigen Frequenzen, insbesondere bei Frequenzen <10 kHz, kann an der Empfängerspule eine umso höhere Induktionsspannung gemessen werden, je höher der Bedeckungsgrad der Empfängerspule ist.

Wenn jedoch die Sendespule mit sehr hohen Frequenzen, nämlich mit 100 kHz bis zu einigen MHz betrieben wird, bilden sich im metallischen Abdeckelement Wirbelströme aus. Diese Wirbelströme verhindern, dass der magnetische Fluss zur Empfängerspule übertragen wird. Die Empfängerspule wird von dem Magnetfeld der Sendespule quasi entkoppelt, wenn das Abdeckelement die Empfängerspule überdeckt. Der Entkopplungsgrad ist umso höher, je höher der Bedeckungsgrad der Empfängerspule ist.

Beidseits und parallel zu der Ebene, in welcher die Empfängerspule und die Sendespule liegen, könnte jeweils ein Abdeckelement angeordnet sein. Durch diese konkrete Ausgestaltung können translatorische Bewegungen der Bauteile, deren relative Verdrehung gemessen werden soll, kompensiert werden. Vor diesem Hintergrund ist denkbar, dass beidseits der Ebene jeweis eine Empfängerspule und eine Sendespule angeordnet sind.

Die hier beschriebene Einrichtung könnte in einer Buchse zur Verwendung in einem Fahrwerk eines Kraftfahrzeugs Verwendung finden. Diese Buchse könnte eine Einrichtung der hier beschriebenen Art umfassen, einen Kern und eine zum Kem konzentrisch angeordnete Hülse, wobei der Kern und die Hülse durch ein elastisches Verbindungselement miteinander verbunden sind und wobei der Kern und die Hülse relativ zueinander verdrehbar sind.

Diese konkrete Ausgestaltung erlaubt es, die Hülse einem ersten Bauteil und den Kem einem zweiten Bauteil drehfest zuzuordnen. Die relative Verdrehung der beiden Bauteile zueinander kann über die Verdrehung der Hülse relativ zum Kern gemessen werden. Die Messung der Verdrehung erfolgt dann mittels der hier beschriebenen Einrichtung. Das elastische Verbindungselement, welches Kern und Hülse miteinander verbindet, dient der Rückstellung des Kerns bzw. der Hülse in eine Neutralposition, nachdem diese aus der Neutralposition verdreht worden sind.

Das Abdeckelement könnte auf einem Laufring positioniert sein, der auf dem Kem drehbar gelagert und zusammen mit der Hülse relativ zum Kern verdrehbar ist. Durch die Positionierung des Abdeckelements auf einem Laufring ist eine nahezu reibungsfreie Verdrehung des Abdeckelements ermöglicht.

Vor diesem Hintergrund könnten die Empfängerspule und die Sendespule auf einer Platine angeordnet sein, die drehfest mit dem Kern verbunden ist. Diese konkrete Ausgestaltung erlaubt eine in axialer Richtung kompakt bauende Buchse, da die Platine sehr flach ausgebildet sein kann.

Die Hülse und der Laufring könnten durch einen Mitnehmerbalg aneinander angelenkt sein. Durch diese konkrete Ausgestaltung folgt der Laufring der Verdrehung der Hülse relativ zum Kern. Vor diesem Hintergrund ist denkbar, dass der Balg aus einem Material gefertigt ist, welches in Drehrichtung eine hohe Steifigkeit und in axialer Richtung eine geringe Steifigkeit zeigt. Durch diese Ausgestaltung können translatorische Bewegungen der Hülse relativ zum Kem ausgeglichen werden, ohne dass der Laufring eine Verkippung oder translatorische Bewegung erfährt. Durch die Steifigkeit in Drehrichtung ist aber sichergestellt, dass der Laufring zuverlässig und nahezu ohne Versatz und Freilauf von der Hülse mitgenommen wird.

Das elastische Verbindungselement könnte als Elastomer ausgebildet sein. Die Verwendung eines Elastomers, beispielsweise Gummi, erlaubt ein Anvulkanisieren des Elastomers an die Hülse und an den Kern, so dass diese verliersicher miteinander verbunden sind. Vor diesem Hintergrund ist denkbar, dass der Kern und die Hülse aus einem metallischen Element gefertigt sind und der Mitnehmerbalg aus einem Elastomer.

Es gibt nun verschiedene Möglichkeiten, die Lehre der vorliegenden Erfindung auf vorteilhafte Weise auszugestalten und weiterzubilden. Dazu ist einerseits auf die nachgeordneten Patentansprüche und andererseits auf die nachfolgende Erläuterung bevorzugter Ausführungsbeispiele der Erfindung anhand der Zeichnung zu verweisen.

In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: eine Schnittansicht einer Buchse zur Verwendung im Fahrwerk eines Kraftfahrzeugs,
- Fig. 2: eine Draufsicht auf eine Einrichtung, wobei zwei Positionen eines Abdeckelements dargestellt sind,
- Fig. 3: eine Schnittansicht einer Sende- und einer Empfängerspule,
- Fig. 4: eine Schnittansicht einer Sende- und Empfängerspule, die von einem Abdeckelement überdeckt sind,
- Fig. 5: eine Sendespule, die von vier Empfängerspulen umgeben ist,
- Fig. 6: eine Schnittansicht der Einrichtung gemäß Fig. 5,
- Fig. 7: eine Schnittansicht der Einrichtung gemäß Fig. 6, wobei das Abdeckelement verkippt ist, und
- Fig. 8: eine Schnittansicht der Einrichtung gemäß Fig. 5, wobei beidseits der Platine jeweils ein Abdeckelement, eine Sendespule und mehrere Empfängerspulen angeordnet sind.

### Ausführung der Erfindung

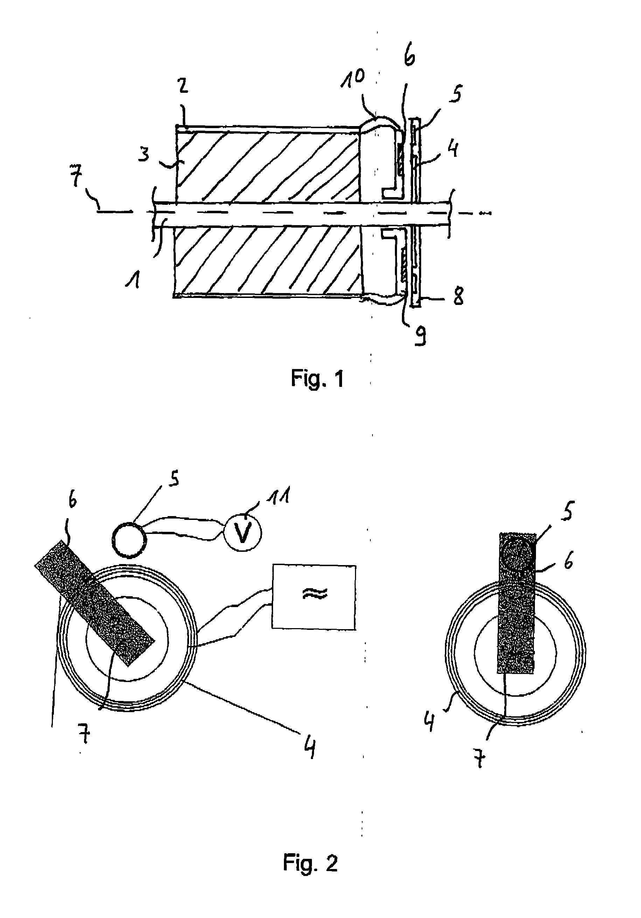

Fig. 1 zeigt eine Buchse zur Verwendung im Fahrwerk eines Kraftfahrzeugs mit einem Kern 1 und einer Hülse 2, welche den Kern 1 konzentrisch umgibt. Der Kern 1 und die Hülse 2 sind durch ein elastisches Verbindungselement 3 miteinander verbunden. Das elastische Verbindungselement 3 ist als Elastomer ausgebildet. Die Hülse 2 und der Kern 1 sind relativ zueinander verdrehbar.

Die Buchse umfasst eine Einrichtung zur Erfassung eines Drehwinkels. Diese Einrichtung umfasst eine Sendespule 4 und eine Empfängerspule 5. Die Empfängerspule 5 ist von der Sendespule 4 beabstandet angeordnet. Die Sendespule 4 erzeugt ein Magnetfeld, welches in der Empfängerspule 5 eine Spannung induziert. Die Empfängerspule 4 und ein Abdeckelement 6 sind relativ zueinander verdrehbar. Das Abdeckelement 6 schirmt die Empfängerspule 5 gegen das Magnetfeld der Sendespule 4 ab oder überträgt den magnetischen Fluss der Sendespule 4 zur Empfängerspule 5.

Die Sendespule 4 und die Empfängerspule 5 liegen ortsfest in einer Ebene, wobei das Abdeckelement 6 relativ zur Empfängerspule 5 und zur Sendespule 4 derart verdrehbar ist, dass es die Empfängerspule 5 zumindest teilweise abdeckt. Die gestrichelt dargestellte Drehachse 7 des Abdeckelements 6 ist zur Achse 7 der Sendespule 4 koaxial angeordnet.

Die Empfängerspule 4 und die Sendespule 5 sind auf einer Platine 8 angeordnet, Das Abdeckelement 6 ist aus einem Metall, nämlich Stahl, gefertigt.

Das Abdeckelement 6 ist auf einem Laufring 9 positioniert, der auf dem Kern 1 drehbar gelagert und zusammen mit der Hülse 2 relativ zum Kem 1 verdrehbar ist. Die Empfängerspule 4 und die Sendespule 5 sind auf einer Platine 8 angeordnet, die drehfest mit dem Kern 1 verbunden ist

Die Hülse 2 und der Laufring 9 sind durch einen Mitnehmerbalg 10 aneinander angelenkt. Der Mitnehmerbalg 10 zeigt in axialer Richtung eine geringere Steifigkeit als in Drehrichtung der Hülse 2.

Fig. 2 zeigt eine Empfängerspule 5, die zu einer Sendespule 4 beabstandet angeordnet ist. Das Abdeckelement 6 ist um eine Achse 7 verdrehbar, wobei die Achse 7 mit der Achse der Sendespule 4 zusammenfällt. In der linken Position in Fig. 2 kann das Magnetfeld der Sendespule 4 die Empfängerspule 5 durchdringen und in dieser eine Induktionsspannung erzeugen. Diese Induktionsspannung wird durch eine Einrichtung 11 erfasst. In der rechten Position in Fig. 2 überdeckt das Abdeckelement 6 die Empfängerspule 5 vollständig, so dass eine Änderung der Induktionsspannung in der Empfängerspule 5 gegenüber der linken Position detektiert werden kann.

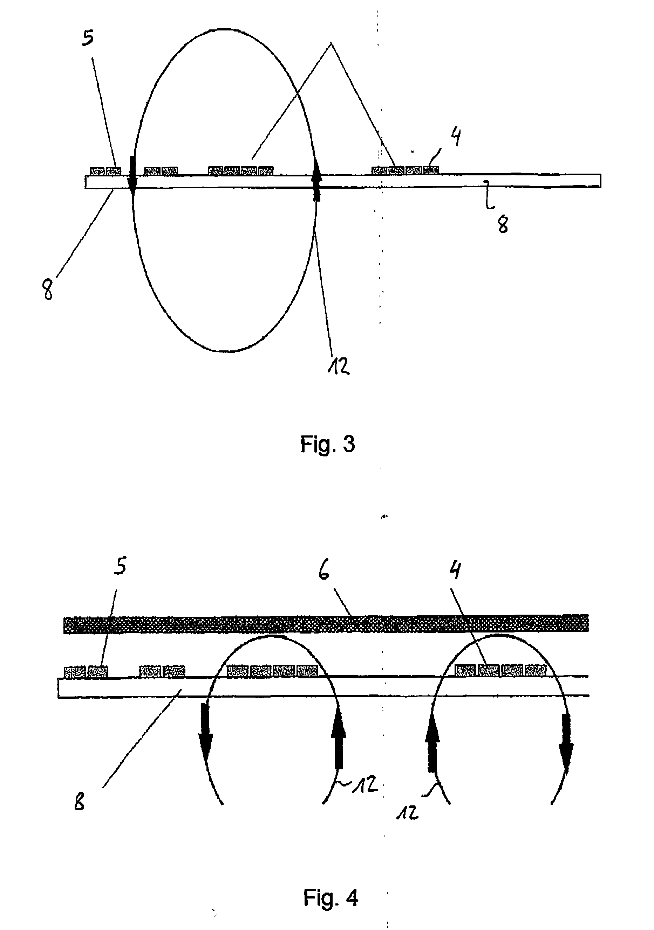

Fig. 3 zeigt eine Schnittansicht der Platine 8, auf der eine Sendespule 4 und eine Empfängerspule 5 angeordnet sind. Fig. 3 zeigt schematisch eine Feldlinie des Magnetfeldes, welches von der Sendespule 4 erzeugt wird und die Empfängerspule 5 durchdringt.

Fig. 4 zeigt die Platine 8, auf der die Sendespule 5 und die Empfängerspule 4 angeordnet sind. Dabei liegen die Sendespule 4 und die Empfängerspule 5 ortsfest in einer Ebene. Das Abdeckelement 6 verhindert, dass das Magnetfeld der Sendespule 4 die Empfängerspule 5 durchdringt. Die Feldlinien 12 des Magnetfeldes der Sendespule 4 sind schematisch gezeigt.

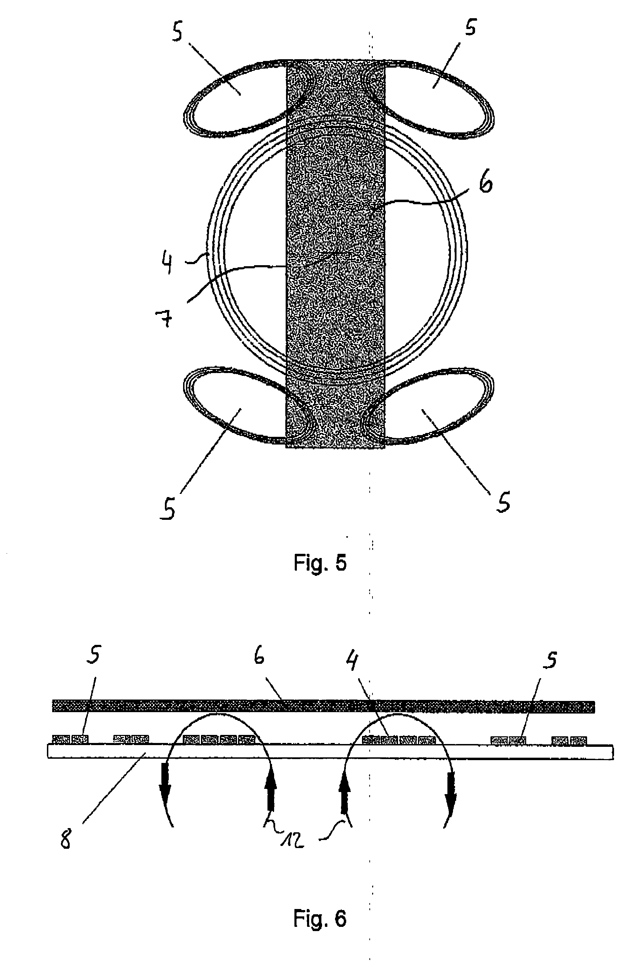

Fig. 5 zeigt eine Sendespule 4, die von vier Empfängerspulen 5 umgeben ist. Fig. 5 zeigt des Weiteren ein Abdeckelement 6, welches um eine Drehachse 7 verdrehbar ist. Die Drehachse 7 fällt mit der Achse 7 der Sendespule 4 zusammen.

Fig. 6 zeigt in einer Schnittansicht die Einrichtung gemäß Fig. 5. Dort ist gezeigt, dass das Abdeckelement 6 die Feldlinien 12 des Magnetfelds der Sendespule 4 derart stört, dass sie die Empfängerspulen 5 nicht erreichen. Die Empfängerspulen 5 und die Sendespule 4 sind auf einer Platine 8 angeordnet.

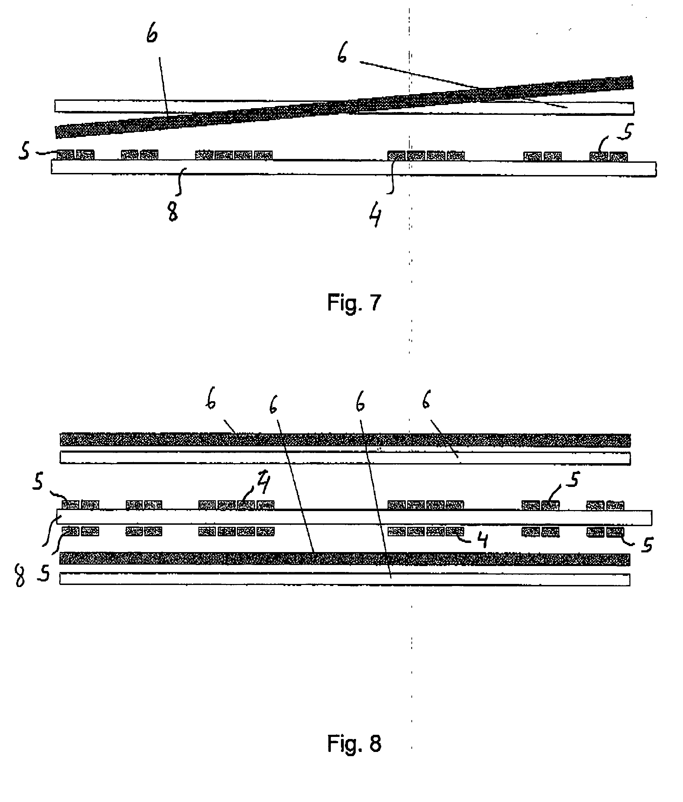

Fig. 7 zeigt die Anordnung gemäß Fig. 5 in einer Schnittansicht. Auf der Platine 8 sind Empfängerspulen 5 und eine Sendespule 4 angeordnet. Überdeckt werden diese von einem verkippten Abdeckelement 6. Durch Verkippen des Abdeckelements 6 wird das Magnetfeld der Sendespule 4 in der linken Empfängerspule 5 stärker abgeschirmt als in der rechten Empfängerspule 5 aus Fig. 7.

Fig. 8 zeigt eine Schnittansicht einer Einrichtung, bei der beidseits einer Platine 8 Empfängerspulen 5 und Sendespulen 4 angeordnet sind. Des Weiteren sind beidseits der Platine 8 Abdeckelemente 6 angeordnet. In Fig. 8 ist die Translationsbewegung der Abdeckelemente 6 von einer ersten Position in eine zweite schraffiert dargestellte Position gezeigt. Eine Veränderung der Induktionsspannungen der Empfängerspulen 5 kann durch translatorische Bewegungen der Abdeckelemente 6 erzeugt werden. Durch Anordnung zweier Abdeckelemente 6 sowie der beidseitigen Anordnung von Empfängerspulen und Sendespulen kann die Translationsbewegung messtechnisch kompensiert werden.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

Abschließend sei ausdrücklich hervorgehoben, dass die zuvor rein willkürlich ausgewählten Ausführungsbeispiele lediglich zur Erörterung der erfindungsgemäßen Lehre dienen, diese jedoch nicht auf diese Ausführungsbeispiele einschränken.

## Patentansprüche

1. Einrichtung zur Erfassung eines Drehwinkels, umfassend mindestens eine Sendespule (4) und mindestens eine Empfängerspule (5), wobei die Empfängerspule (5) von der Sendespule (4) beabstandet angeordnet ist und wobei die Sendespule (4) ein Magnetfeld erzeugt, welches in der Empfängerspule (5) eine Spannung induziert, **dadurch gekennzeichnet, dass** die Empfängerspule (5) und ein Abdeckelement (6) derart relativ zueinander verdrehbar sind, dass das Abdeckelement (6) die Empfängerspule (5) zumindest teilweise bedeckt.

2. Einrichtung nach Anspruch 1, **dadurch gekennzeichnet, dass** die Sendespule (4) und die Empfängerspule (5) ortsfest in einer Ebene liegen, wobei das Abdeckelement (6) relativ zur Empfängerspule (5) und zur Sendespule (4) derart verdrehbar ist, dass es die Empfängerspule (5) zumindest teilweise abdeckt.

3. Einrichtung nach Anspruch 1 oder 2, **dadurch gekennzeichnet, dass** die Drehachse (7) des Abdeckelements (6) zur Achse der Sendespule (4) koaxial angeordnet ist.

4. Einrichtung nach einem der Ansprüche 1 bis 3, **dadurch gekennzeichnet, dass** die Empfängerspule (5) und die Sendespule (4) auf einer Platine (8) angeordnet sind.

5. Einrichtung nach einem der Ansprüche 1 bis 4, **dadurch gekennzeichnet, dass** mehrere Empfängerspulen (5) die Sendespule (4) umgeben.

6. Einrichtung nach einem der Ansprüche 1 bis 5, **dadurch gekennzeichnet, dass** das Abdeckelement (6) aus einem Metall gefertigt ist.

7. Einrichtung nach einem der Ansprüche 1 bis 6, **dadurch gekennzeichnet, dass** beidseits und parallel zu der Ebene, in welcher die Empfängerspule (4) und die Sendespule (5) liegen, jeweils ein Abdeckelement (6) angeordnet ist.

8. Buchse zur Verwendung im Fahrwerk eines Kraftfahrzeugs, umfassend eine Einrichtung nach einem der voranstehenden Ansprüche, einen Kern (1) und eine zum Kern (1) konzentrisch angeordnete Hülse (2), wobei der Kern (1) und die Hülse (2) durch ein elastisches Verbindungselement (3) miteinander verbunden sind und wobei der Kern (1) und die Hülse (2) relativ zueinander verdrehbar sind.

9. Buchse nach Anspruch 8, **dadurch gekennzeichnet, dass** das Abdeckelement (6) auf einem Laufring (9) positioniert ist, der auf dem Kern (1) gelagert und zusammen mit der Hülse (2) relativ zum Kern (1) verdrehbar ist.

10. Buchse nach Anspruch 8 oder 9, **dadurch gekennzeichnet, dass** die Empfängerspule (5) und die Sendespule (4) auf einer Platine (8) angeordnet sind, die drehfest mit dem Kern (1) verbunden ist.

11. Buchse nach Anspruch 9 oder 10, **dadurch gekennzeichnet, dass** die Hülse (2) und der Laufring (9) durch einen Mitnehmerbalg (10) aneinander angelenkt sind.

12. Buchse nach einem der Ansprüche 8 bis 11, **dadurch gekennzeichnet, dass** das elastische Verbindungselement (3) als Elastomer ausgebildet ist.
